Europäisches Patentamt

European Patent Office

Office européen des brevets

(11) Publication number : **0 490 516 A1**

# (12) EUROPEAN PATENT APPLICATION

(21) Application number : **91310881.7**

(22) Date of filing : **26.11.91**

(51) Int. Cl.⁵ : **B60R 22/16**

(30) Priority : **26.11.90 GB 9025659**

(43) Date of publication of application :
**17.06.92 Bulletin 92/25**

(84) Designated Contracting States :
**DE FR GB IT**

(71) Applicant : **IRVIN GREAT BRITAIN LTD.**
**Icknield Way**
**Letchworth, Herts SG6 1EU (GB)**

(72) Inventor : **Oddy, Mark Alan**
**138 Wilbury Road**
**Letchworth, Herts (GB)**

(74) Representative : **Davies, Christopher Robert**
**Frank B. Dehn & Co. Imperial House 15-19**
**Kingsway**
**London WC2B 6UZ (GB)**

(54) **Seat belt.**

(57)   A seat belt for restraining passengers during impact conditions has an attenuating strap (8) and a restraint strap (7). The attenuating strap (8) extends along part of the way of the restraint strap (7) and has greater elasticity than the restraint strap (7) whilst the restraint strap (7) has a larger breaking strain than the attenuating strap (8). In impact conditions, shock loading is initially absorbed by stretching of the attenuating strap (8). Subsequently, if the shock loading exceeds a predetermined value, the attenuating strap breaks and the restraint strap (7) absorbs the shock loading.

FIG. 1a

EP 0 490 516 A1

This invention relates to seat belts particularly for use in aircraft or other situations where extreme shock loading may be encountered.

In the light of recent serious air crashes new regulations have been proposed whereby an aircraft seat and belt must be capable of withstanding a maximum impact force of 16g. This has increased from 9g which was applicable under previous regulations.

The withstanding of such extreme forces does however cause problems. Whilst it is possible to provide a belt webbing which can accommodate these forces, problems have been encountered with the aircraft seats themselves being pulled from their mountings under such extreme conditions. Even with a combination of seat and belt which can withstand such shock loadings, a deceleration of up to 16g is really not acceptable for passengers wearing a lap strap only and is likely to cause injury.

Viewed from one aspect the present invention comprises a seat belt comprising a restraint strap, characterised in that there is provided an attenuating strap extending at least part of the way along the restraint strap, the attenuating strap being more elastic but having a lower breaking strain than the restraint strap, and the arrangement being such that in use, in the event of an impact, shock loading is at least initially absorbed by stretching of the attenuating strap.

Thus, in accordance with the invention an attenuating strap is provided which has a greater elasticity than traditional seat belt straps. In this way, in the event of an impact, the shock load is absorbed by the attenuating strap and the maximum instantaneous deceleration the passenger undergoes is reduced. In the case of, for example, a light passenger such as a small child, or an impact which is not extreme, the attenuating strap may be sufficient to absorb all of the load. However, in more extreme cases the arrangement is such that the stronger restraint strap becomes effective after the attenuating strap has stretched by a certain amount. In the preferred embodiment, the attenuating strap is arranged to break as the restraint strap takes up the load of the passenger. Thus, the maximum strength of the belt is provided by the restraint strap whereas the initial elasticity is provided by the attenuating strap.

In a preferred embodiment, the attenuating and restraint straps are firmly anchored together at each end of a belt adjacent the fasteners at each end thereof. The total length of restraint strap between the fasteners is greater than that of the attenuating strap, so that the restraint strap does not take up the load until the attenuating strap has stretched by a predetermined amount. For neatness, the restraint strap may be stitched to the attenuating strap along part of its length, and the restraint strap may be provided with a stitched tuck or tucks to accommodate its extra length. Alternatively, the attenuating strap may not extend the full length between the fasteners, but could, for example, be firmly stitched to the restraint strap either side of a tuck.

In a preferred embodiment the attenuating strap has a breaking strain of about 4500 Newtons and the restraint strap has a minimum breaking strain of about 24,000 Newtons. In such embodiment, tests have shown that with a seat belt assembly (i.e. two belt lengths in accordance with the invention coupled together by a central lap fastener) the maximum instantaneous deceleration force encountered by a passenger may be reduced to below 9g even for the most extreme impacts. A preferred embodiment incorporates commercially available seat belt webbing for the restraint strap and light weight webbing for the attenuating strap.

A preferred embodiment of the invention will now be described, by way of example only, with reference to the accompanying drawings, in which:

Fig. 1a is a side elevation of a seat belt assembly in accordance with the invention interengaged with one another;

Fig. 1b is a plan view of the belt assembly shown in Fig. 1a;

Figs. 2a, 2b, 2c illustrate schematically, in side elevation, the stretching and breaking of the attenuating strap; and

Fig. 3 illustrates schematically a passenger wearing the seat belt assembly.

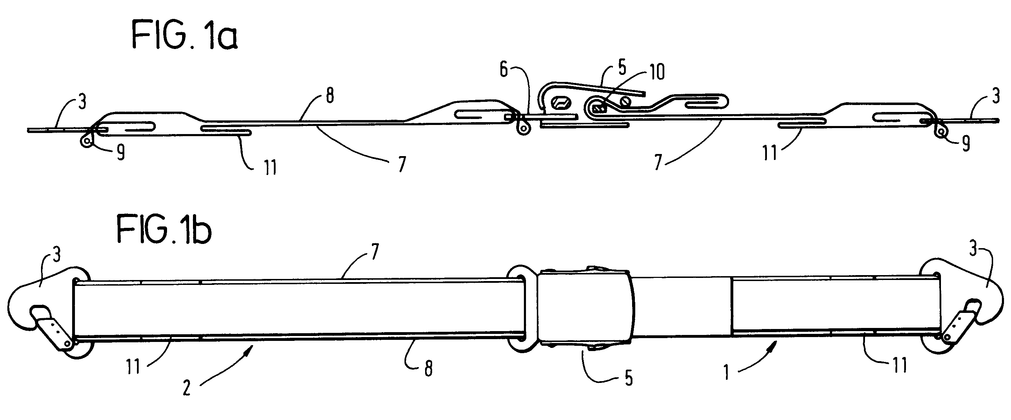

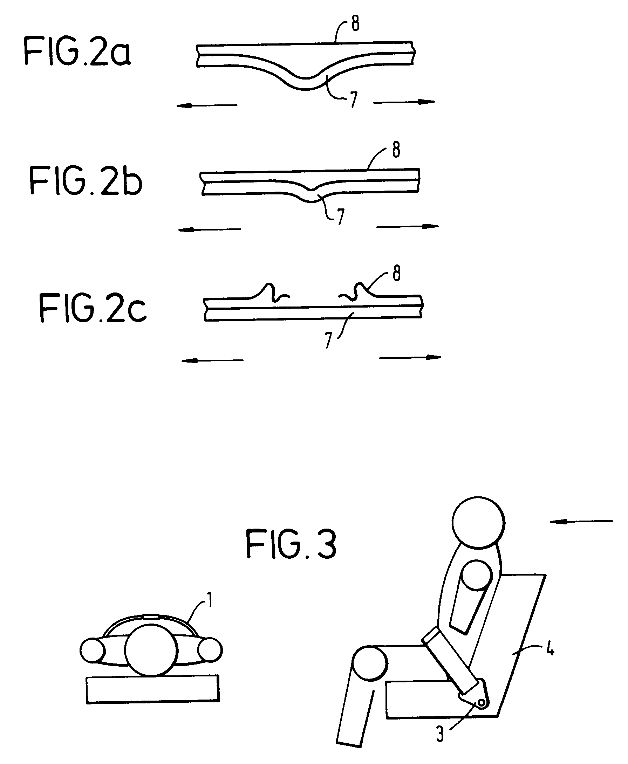

As shown in Figs. 1a and 1b two seat belt lengths 1,2 are shown interengaged with one another. The seat belts include anchoring fasteners 3,4 for anchoring the belts to a seat 4 (Fig. 3). The first belt 1 includes a releasable female fastener 5 adapted for mating engagement with a male fastener 6 of the other belt 2 in a known manner. The belt assembly thus formed extends across the lap of the wearer as shown in Fig. 3. Each belt 1,2 is formed of a restraint strap 7 and attenuating strap 8. The attenuating strap 8 may be of the same width as the restraint strap 7 or narrower. However to satisfy current regulations the two straps 7 and 8 must be of the same width. The attenuating strap 8 may be thinner than the restraint strap 7. The attenuating strap is firmly anchored to the fasteners at each end of the belt by being sewn round stops 9 formed in fasteners 3 and, in the case of fastener 5, by being clamped by adjusting mechanism 10 along with the restraint strap.

The attenuating and restraint straps are stitched to one another part of the way along their lengths, and the restraint strap is formed with a stitched tuck 11 at which the restraint strap is folded back on itself so that the total length of the restraint strap between the respective fasteners is greater than that of the attenuating strap. As shown schematically in Figs. 2a to 2c, in the event of a severe impact in use, the attenuating strap initially stretches as the slack in the restraint strap 7 formed by the tucks 11 is gradually taken up. In this respect the stitching between the straps (which is provided mainly for neatness) breaks to permit stretching of the attenuating strap and unfolding of the tuck 11. As shown in Fig. 2c in an extreme crash condition the attenuating strap eventually breaks whereby the restraint strap then takes up the load alone. This ensures that the passenger is restrained on the seat. For a light passenger, or in less extreme conditions, the attenuating strap itself may be effective to restrain the load.

A particular advantage of the seat belt in accordance with the invention is that it may incorporate traditional fittings and may therefore readily replace known belts without the need to modify the seat or fasteners. In the preferred embodiment standard commercially available webbing is used for the restraint strap and a lighter weight webbing for the attenuating strap. Such a combination can reduce the maximum instantaneous deceleration force encountered by a passenger to below 9g even in the most extreme crash conditions.

It will be seen that, for the adjustable belt 1, the length of attenuating strap between the fasteners 3,5 varies as the length of the restrained strap is varied. The degree of attenuation available therefore increases with increased length of the belt which is advantageous in that greater attenuation is desirable for larger, heavier passengers.

## Claims

1. A seat belt comprising a restraint strap (7), characterised in that there is provided an attenuating strap (8) extending at least part of the way along the restraint strap (7), the attenuating strap (8) being more elastic but having a lower breaking strain than the restraint strap (7), and the arrangement being such that in use, in the event of an impact, shock loading is at least initially absorbed by stretching of the attenuating strap (8).

2. A seat belt as claimed in claim 1, wherein the restraint strap is arranged to absorb the shock loading after the attenuating strap has been stretched by a predetermined amount.

3. A seat belt as claimed in claim 2, wherein the attenuating strap (8) is arranged to break as the restraint strap absorbs shock loading.

4. A seat belt as claimed in claim 2 or 3, wherein the total length of restraint strap (8) is greater than that of the attenuating strap (7) such that the restraint strap (8) does not take up the load until the attenuating strap has been stretched by said predetermined amount.

5. A seat belt as claimed in claim 4, wherein the restraint strap (7) is provided with stitched tucks so as to accommodate its additional length.

6. A seat belt as claimed in any of the preceding claims, wherein the restraint strap (7) is stitched to the attenuating strap (8) along part of its length.

7. A seat belt as claimed in any preceding claim wherein the attenuating strap has a breaking strain in the region of 4500N.

8. A seat belt as claimed in any preceding claim, wherein the restraint strap has a minimum breaking strain in the region of 24000N.

9. A seat belt as claimed in any preceding claim, wherein the attenuating and restraint straps are arranged to be anchored together at each end of a belt adjacent fasteners at each end thereof, said fasteners being for anchoring said belt to a seat.

10. A seat belt comprising two seat belt lengths (1,2) interengageable with each other, wherein each seat belt length (1,2) is as claimed in any of the preceding claims.

11. A seat belt comprising restraining strap means having a first initial restraining action and a second subsequent restraining action, wherein the second restraining action is greater than the first restraining force and, the second restraining action only comes into effect when, in impact conditions, the shock loading exceeds a predetermined value.

FIG. 1a

FIG. 1b

EP 0 490 516 A1

FIG.2a

8

7

FIG.2b

8

7

FIG.2c

8

7

FIG. 3

1

4

3

EP 0 490 516 A1

**European Patent Office**

**EUROPEAN SEARCH REPORT**

Application Number

EP 91 31 0881

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 065 133 (S.A.R.L. LAMBIN & RAVAU) | 1-7,11 | B60R22/16 |
| Y | * page 2, line 7 - line 52; figures 1,2 * | 9,10 | |
| | --- | | |
| X | US-A-4 138 157 (DAVID PICKETT ET AL.) | 1-6,11 | |
| | * column 2, line 49 - line 64; figure 2 * | | |
| | --- | | |
| Y | FR-A-1 452 785 (CLAUDE JOSEPH) | 9 | |
| | * page 1, line 58 - line 78; figures * | | |
| | --- | | |
| Y | DE-A-1 506 039 (MARTIN GÖRISCH) | 10 | |
| | * page 6, line 29 - page 7, line 1; figures * | | |
| | | | |
| | ----- | | |
| | | | TECHNICAL FIELDS SEARCHED (Int. Cl.5) |
| | | | B60R |

The present search report has been drawn up for all claims

| Place of search | Date of completion of the search | Examiner |
|---|---|---|
| THE HAGUE | 06 MARCH 1992 | AREAL CALAMA A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)